# EUROPEAN PATENT SPECIFICATION

(11) **EP 4 202 142 B1**
(45) Date of publication and mention of the grant of the patent: **09.10.2024**
(21) Application number: 21216558.3
(22) Date of filing: 21.12.2021
(51) Int. Cl.: E04B 9/04

(54) **AN ACOUSTICAL TILE MEMBER**
SCHALLDÄMMENDES DECKENPLATTENELEMENT
ÉLÉMENT DE TUILE ACOUSTIQUE

(43) Date of publication of application: 28.06.2023
(73) Proprietor: Saint-Gobain Ecophon AB, 260 61 Hyllinge (SE)
(72) Inventor: PERSSON, Torbjörn, 254 83 Helsingborg (SE)
(74) Representative: AWA Sweden AB

(56) References cited:
- WO-A1-2017/040236
- FR-A- 1 457 708
- US-A1- 2009 173 030
- US-A1- 2019 062 574

## Description

### Field of the invention

The present invention relates to suspended ceiling systems. More specifically, the present invention relates to an acoustical tile member.

### Background art

A conventional suspended ceiling system normally comprises a grid of profiles supporting tile members arranged in openings formed by the grid of profiles. The tile members are typically adapted for sound absorption and may be formed by mineral wool.

The tile members may be provided with grooves along their side edges, which grooves are configured to receive supporting flanges of the grid of profiles.

The grooves may have a complex design in order to allow concealed mounting (i.e. such that the grid of profiles is not visible in the installed state of the suspended ceiling system) and/or to allow dismounting of a single tile element in an installed state of the suspended ceiling system. The grooves are conventionally formed in a milling/grinding/rebating process.

It has further become increasingly common to use woodwool in ceiling tiles, either alone or in combination with mineral wool. Woodwool is an organic material that may provide a desired aesthetic appearance and a reduced environmental impact for each manufactured tile element. However, provision of complex grooves in a tile element comprising woodwool drives cost and production time and it is difficult to achieve a groove allowing the desired properties of the tile member mentioned above. US 2009/173030 A1 describes an acoustical tile member.

### Summary of the invention

In view of that stated above, the object of the present invention is to provide a tile member comprising woodwool that facilitates achieving a low production cost and reduced environmental impact. A further object is to provide a tile member comprising woodwool and having a groove configuration provided thereto that facilitates mounting and dismounting of the acoustical tile member.

To achieve at least one of the above objects and also other objects that will be evident from the following description, a tile member having the features defined in claim 1 is provided according to the present invention. Preferred embodiments of the device will be evident from the dependent claims.

More specifically, there is provided according to a first aspect an acoustical tile member having a front surface intended to face a room, an opposing rear surface and four side surfaces connecting the front surface and the rear surface. The acoustical tile member comprising a first layer and a second layer, the first layer being associated with the front surface and comprises woodwool. Each of at least two opposing side surfaces of the four side surfaces is provided with a groove configuration for mounting of the acoustical tile member and extending along the associated side surface, each groove configuration being formed by a first groove in the first layer and a second groove in the second layer. By providing a groove configuration comprising a groove in each of the first and second layers, a complex groove configuration can be achieved while allowing a large portion of the acoustical tile member to be made from wood wool. For instance, the acoustical tile member may be provided with a groove configuration allowing a single acoustical tile member to be dismounted, which is typically not allowed in prior art tile members comprising wood wool in a suspended ceiling system with concealed or semi concealed grid profiles. The acoustical tile member may thus be dismounted with easiness, low demounting height - i.e. with low upward vertical movement of the tile in order to release it from a supporting grid profile, with high accuracy and precision. Additionally, an acoustical tile member comprising wood wool may reduce the environmental impact in the manufacturing of the acoustical tile member.

The first groove may have a single step profile, providing reliable forming of the first groove in the wood wool material of the first layer. The single step profile can in combination with the second groove form a large variety of groove configurations.

The first layer may have a thickness of at least 10 mm.

The second layer may comprise a mineral fibre material such as mineral wool. The second layer can thus improve and complement the properties of the wood wool in the first layer, thus providing an acoustical tile member having desired acoustic properties.

The first layer may be arranged directly against the second layer.

The first layer may further be adhered to the second layer, for instance may the first layer and second layer be separately manufactured and subsequently adhered to each other with an adhesive such as glue. The first and second layer may further be mechanically adhered to each other. The manufacturing of each of the first and second layer can thus be performed without having to compromise due to restrictions of the material properties of the other layer and thus can an improved acoustical tile member be provided.

Each of the side surfaces may be provided with the groove configuration.

Two opposing side surfaces of the four side surfaces may be configured for unsupported mounting of the acoustical tile member.

Each groove configuration may be configured for concealed or semi concealed mounting of the tile member, thus hiding an associated support structure such as a grid of profiles from view from the room below the acoustical tile member.

Each second groove may comprise an abutment surface configured for engagement with a support structure, such as a grid of profiles.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Figure 1 discloses a perspective view of an acoustical tile member.
Figure 2 discloses a side view of two acoustical tile members mounted to a grid of profiles.
Figure 3 discloses a side view of two acoustical tile members mounted to a grid of profiles.
Figure 4 discloses a side view of two acoustical tile members mounted to a grid of profiles.
Figure 5 discloses a side view of an acoustical tile member mounted to a grid of profiles.

### Description of embodiments

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

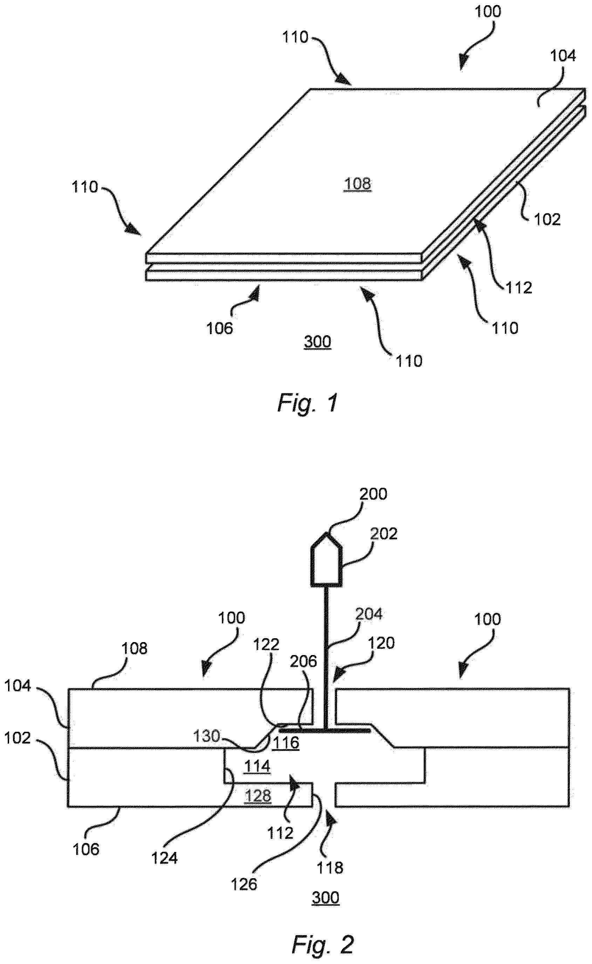

Figure 1 discloses a perspective view of an acoustical tile member 100 according to an embodiment of the teachings herein. The tile member 100 is configured to be mounted to a support structure, preferably to a grid of profiles 200 (shown in Figures 2-5). Typically, the grid of profiles 200 form rectangular openings into which a respective tile member 100 may be arranged supported by the grid of profiles 200 on at least two sides of the tile member 100. The tile member 100 may thus form part of a suspended ceiling system which may provide functions such as sound absorption, concealment of building equipment and wiring and provision of an aesthetically pleasing interior ceiling.

The acoustical tile member 100 has a front surface 106 intended to face a room 300. The front surface 106 may be provided with an additional layer, for instance for providing a desired appearance to the acoustical tile member 100. The acoustical tile member 100 further comprises a rear surface 108 facing opposite the front surface 106.

The tile member 100 further comprises four side surfaces 110, 110a connecting the front surface 106 and the rear surface 108. Preferably, the tile member 100 has a rectangular shape.

The acoustical tile member 100 comprises a first layer 102 and a second layer 104, the first layer 102 being associated with the front surface 106 and comprises a wood fibre material, preferably wood wool. The wood wool may comprise a binder such as a cement based binder or geopolymer based binder. The first layer 102 may thus be exposed to the room 300 below the tile member 100, thus providing a desired aesthetic appearance to the tile member 100. The first layer 102 preferably has a thickness of at least 10 mm.

The second layer 104 may comprise a mineral fibre material such as stone wool and/or glass wool. The second layer 104 may thus complement the first layer 102 in providing a desired acoustic property to the acoustical tile member 100, for instance in terms of providing improved sound absorption for certain sound frequencies or sound reflection/scattering etc.

It is to be realized that the acoustical tile member 100 may comprise additional layers to those mentioned above, even intermediately between the first layer 102 and the second layer 104.

Preferably however, the first and second layer 104, 106 are arranged superimposed and adjacent to each other.

Each of at least two opposing side surfaces 110 of the four side surfaces 110, 110a of the acoustical tile member 100 is provided with a groove configuration 112 for mounting of the acoustical tile member 100 and extending along the associated side surface 110. Each groove configuration 112 is formed by a first groove 114 in the first layer 102 and a second groove 116 in the second layer 104 as illustrated in for example Figure 2. The groove configuration 112 may be formed in a suitable manufacturing process such as a milling operation in which both the first groove 114 and the second groove 116, and thus the entire groove configuration 112, is formed simultaneously in one manufacturing process.

Alternatively, the first groove 114 and the second groove 116 may be formed in separate manufacturing processes, whereby the groove configuration 112 is formed as the first layer 102 and the second layer 104 are attached to one another.

Providing a groove configuration 112 formed in two separate layers 102, 104 of the acoustical tile member 100 reduces the limiting effect of the wood wool of the first layer 102 on the type of groove configuration that can be provided to the acoustical tile member 100.

The first layer 102 and the second layer 104 may be attached to each other for instance by means of an adhesive. The first layer 102 and second layer 104 may further be mechanically adhered to each other, for instance by means of nails, clips or similar.

Turning to Figure 2 in which a side view is shown of two acoustical tile members 100 which are supported by a support structure in the form of a grid of profiles 200. The grid of profiles 200 may as is shown comprise a profile having two laterally extending flanges 206 and an upstanding web 204 provided with a bulb 202 at its free end. The groove configuration 112 forms vertical support for the associated acoustical tile member 100 by abutting against the lateral flanges 206 of the grid of profiles 200. The groove configuration 112 may further allow dismounting of a single tile element.

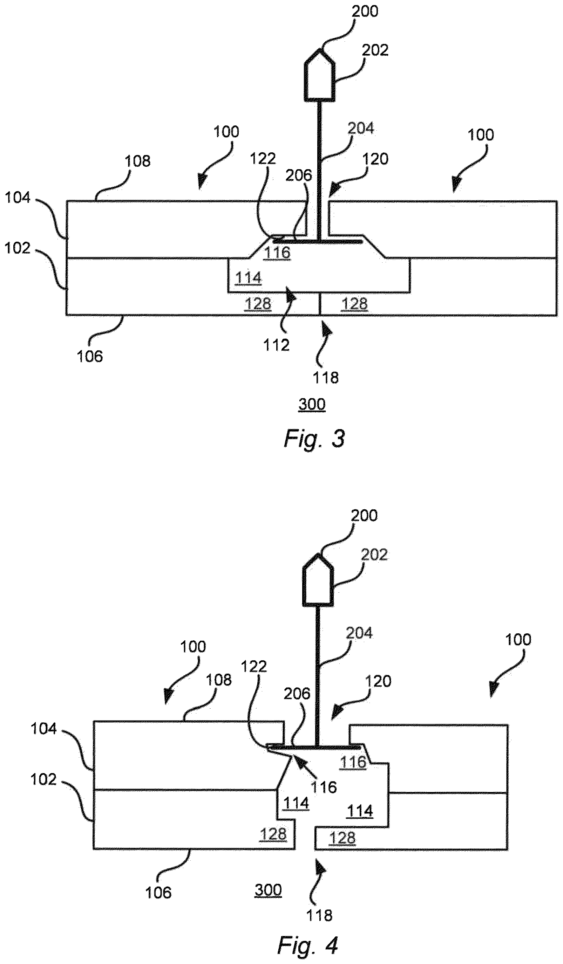

The first groove 114 may have a single step profile, as illustrated in Figure 2 and further shown in Figures 3 to 5. The single step profile of the first groove 114 facilitates manufacturing of the acoustical tile member 100. It is generally difficult to form complex grooves in wood wool due to the characteristics of the material, however single step profiles have been proven to allow being reliably formed in wood wool. In combination with the second groove 116 in the second layer 104, which may be of a more complex shape as allowed by the material of the second layer 104, the groove configuration 112 can be provided with a large variation of shapes.

In relation to the shape of the first groove 114, single step profile may be interpreted as that the first layer 102 comprises two laterally offset surfaces 124, 126 formed along at least two opposite side surfaces 110 of the tile member 100. The first groove 114 may thus be essentially rectangular.

Preferably, the first groove 114 is formed such that a lip 128 is formed adjacent to the front surface 106 of the tile member 100. The lip 128 may extend such that a gap 118 is formed between two adjacent tile members 100. The lip 128 may extend such that it is vertically aligned with the lateral side of the second layer 104.

An upper gap 120 is preferably formed between the lateral side of the second layer 104 between side surfaces 110, 110a of two adjacent tile members 100 in order to accommodate the grid of profiles 200.

The first groove 114 may as mentioned be an essentially rectangular groove formed formed along the periphery of the first layer 102 along at least two opposite side surfaces 110 of the tile member 100. The first groove 114 is formed on the side of the first layer 102 opposite the front surface 106, preferably adjacent to the second layer 104.

The second groove 116 may be provided with an abutment surface 122 facing towards the front surface 106 and preferably in a downwardly direction. I.e. the abutment surface 122 may have a lateral extension and be configured to be horizontally arranged when the acoustical tile member 100 is mounted to the support structure. The abutment surface 122 forming the contact between the lateral flange 206 of the grid of profiles 200 and the acoustical tile member 100.

The abutment surface 122 being formed in the second layer 104 is beneficial as the second layer 104 may be formed from a mineral fiber material having higher structural strength, for instance being less fragile or brittle, than the wood wool of the first layer 102, thus reducing the risk of the tile member 100 falling of the grid of profiles 200 or that the groove configuration 112 is damaged during mounting/demounting. Moreover, as mentioned in the foregoing, the material of the second layer 104 allows a higher freedom in terms of the allowed shape of the groove therein.

An inclined surface 130 may also be provided in the second groove 116, the inclined surface 130 being arranged adjacent to the abutment surface 122 and closer to the centre/proximally of the acoustical tile member 100 than the abutment surface 122. The inclined surface 130 facilitates mounting of the acoustical tile member 100 as the inclined surface 130 will slide against the lateral flange 206 of the grid of profiles 200 by the force of gravity until the lateral flange 206 abuts against the abutment surface 122. The acoustical tile member 100 is thus correctly positioned in relation to the grid of profiles 200.

It is also to be realized that each of the side surfaces 110 of the acoustical tile member 100 may be provided with the groove configuration 112.

Moreover, it is to be realized that both acoustical tile members 100 shown in each of Figures 2 to 4 may be considered identical and thus that a single acoustical tile member 100 may be provided with a groove configuration 112 as illustrated on the left acoustical tile member on one side surface 110 and a groove configuration 112 as illustrated on the right acoustical tile member 100 on the opposite side surface 110.

Figure 3 discloses a side view of acoustical tile members 100 which are supported by a grid of profiles 200. The embodiment in Figure 3 is identical to that shown in Figure 2 with the exception of the extension of the lip 128. In Figure 3, the lip 128 is provided with a lateral extension that is such that the lip 128 is in the proximity of the lip on the adjacent tile member 100. The lateral extension of the lip 128 may be such that the lip 128 is abutting against the lip on the adjacent tile member 100. The gap 118 between the adjacent tile members 100 may thus be very small or non-existent.

The lip 128 may extend laterally past the side surface 110 formed by the second layer 104, i.e. the lateral side/distal surface of the second layer 104.

The grid of profiles 200 can thus be hidden from view from the room 300 below the tile member 100, i.e. the tile element 100 can be configured for concealed mounting. It is to be realized that the features described in relation to Figure 3 can be freely combined with the other embodiments disclosed herein.

Figure 4 discloses a side view of two acoustical tile members 100 which are supported by a grid of profiles 200. As is illustrated in Figure 4, the lip 128 on opposite sides of the tile member 100 may extend laterally to different lengths such that the gap 118 is offset in relation to the centre of the upper gap 120 betwenn the second layer 104 of two adjacent tile members 100. The gap 118 may further be configured to be laterally offset from a plane defined by of the web 204 of the grid of profiles 200. This may faciliate mounting of the acoustical tile member 100 and further facilitate concealed mounting of the acoustical tile member 100 on the grid of profiles 200 such that the grid of profiles 200 is hidden from from view from the room 300 below the tile member 100.

The first groove 114 in the groove configuration 112 on opposite side surfaces 110 of the tile member 100 may further be provided with different dimensions. For instance may the groove configuration 112 on one side be configured for placing against the grid of profiles 200 first, while the opposite side groove configuration 112 is configured to be placed on the grid of profiles 200 secondly by pivoting the tile member 100 around the contact point between the groove configuration 112, more specifically the abutment surface 122 thereof, and the grid of profiles on the opposite side of the tile member 100.

Moreover, the second groove 116 may be formed differently in the groove configuration 112 on opposite side surfaces 110 of the acoustical tile member 100. The second groove 116 on one side may comprise a slot forming the abutment surface 122, wherein the surface in the slot opposite the abutment surface 122 is inclined such that the slot tapers laterally from the side surface 110 towards the proximal side/bottom of the slot. Such a second groove 116 facilitates that the acoustical tile member 100 can be pivoted in at least a downwardly direction around a contact point between the abutment surface 122 and the lateral flange 206 of the grid of profiles.

The second groove 116 on the opposite side may be identical to that described in the foregoing or as is shown in Figure 4 be provided with a different shape e.g. the shape of the second groove 116 described in conjunction with Figure 2.

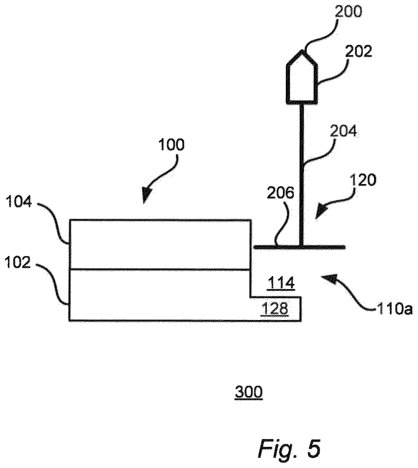

Figure 5 discloses a side view of an acoustical tile member 100 being arranged adjacent to a grid of profiles 200. The acoustical tile member 100 shown in Figure 5 is configured for unsupported mounting as two opposing side surfaces 110a of the four side surfaces 110, 110a are configured for unsupported mounting by not being provided with an abutment surface 122. Preferably however, the side surfaces 110a are configured to be arranged in close proximity of the lateral flanges 206 of the grid of profiles 200, thus providing lateral stability to the suspended ceiling which the acoustical tile member 100 and the grid of profiles 200 may form part of.

As is also illustrated in Figure 5, the opposing side surfaces 110a of the acoustical tile member 100 that are configured for unsupported mounting may comprise a first groove 114 as described above and thus a lip 128 also as described in the foregoing. The lateral extension of the lip 128 may be varied accordingly, in order to for instance achieve a concealed mounting of the acoustical tile member 100.

It will be appreciated that the present invention is not limited to the embodiments shown. Several modifications and variations are thus conceivable within the scope of the invention which thus is exclusively defined by the appended claims.

## Claims

1. An acoustical tile member (100) having a front surface (106) intended to face a room (300), an opposing rear surface (108) and four side surfaces (110, 11 0a) connecting the front surface (106) and the rear surface (108), the acoustical tile member (100) comprising a first layer (102) and a second layer (104), the first layer (102) being associated with the front surface (106) and comprises woodwool, wherein each of at least two opposing side surfaces (110) of the four side surfaces (110, 110a) is provided with a groove configuration (112) for mounting of the acoustical tile member (100) and extending along the associated side surface (110), wherein each groove configuration (112) is formed by a first groove (114) in the first layer (102) and a second groove (116) in the second layer (104).

2. The acoustical tile member (100) according to claim 1, wherein the first groove (114) has a single step profile.

3. The acoustical tile member (100) according to claim 1 or 2, wherein the first layer (102) has a thickness of at least 10 mm.

4. The acoustical tile member (100) according to any one of the preceding claims, wherein the second layer (104) comprises mineral wool.

5. The acoustical tile member (100) according to any one of preceding claims, wherein the first layer (102) is arranged directly against the second layer (106).

6. The acoustical tile member (100) according to any one of preceding claims, wherein the first layer (102) is adhered to the second layer (104).

7. The acoustical tile member (100) according to any one of preceding claims, wherein each of the side surfaces (110) is provided with the groove configuration (112).

8. The acoustical tile member (100) according to any one of claims 1 to 6, wherein two opposing side surfaces (110a) of the four side surfaces (110, 110a) are configured for unsupported mounting of the acoustical tile member (100).

9. The acoustical tile member (100) according to any one of preceding claims, wherein each groove configuration (112) is configured for concealed mounting of the tile member (100).

10. The acoustical tile member (100) according to any one of the preceding claims, wherein each second groove (116) comprises an abutment surface (122) configured for engagement with a support structure.

## Patentansprüche

1. Akustikplattenelement (100) mit einer vorderen Fläche (106), die ausgelegt ist, um einem Raum (300) zugewandt zu sein, einer gegenüberliegenden hinteren Fläche (108) und vier Seitenflächen (110, 110a), die die vordere Fläche (106) und die hintere Fläche (108) verbinden, wobei das Akustikplattenelement (100) eine erste Schicht (102) und eine zweite Schicht (104) umfasst, wobei die erste Schicht (102) der vorderen Fläche (106) zugeordnet ist und Holzwolle umfasst, wobei jede von mindestens zwei gegenüberliegenden Seitenflächen (110) der vier Seitenflächen (110, 110a) mit einer Nutkonfiguration (112) zum Montieren des akustischen Plattenelements (100) versehen ist und sich entlang der zugeordneten Seitenfläche (110) erstreckt, wobei jede Nutkonfiguration (112) durch eine erste Nut (114) in der ersten Schicht (102) und eine zweite Nut (116) in der zweiten Schicht (104) gebildet ist.

2. Akustikplattenelement (100) nach Anspruch 1, wobei die erste Nut (114) ein einstufiges Profil aufweist.

3. Akustikplattenelement (100) nach Anspruch 1 oder 2, wobei die erste Schicht (102) eine Dicke von mindestens 10 mm aufweist.

4. Akustikplattenelement (100) nach einem der vorhergehenden Ansprüche, wobei die zweite Schicht (104) Mineralwolle umfasst.

5. Akustikplattenelement (100) nach einem der vorhergehenden Ansprüche, wobei die erste Schicht (102) direkt gegen die zweite Schicht (106) angeordnet ist.

6. Akustikplattenelement (100) nach einem der vorhergehenden Ansprüche, wobei die erste Schicht (102) an die zweite Schicht (104) angeklebt ist.

7. Akustikplattenelement (100) nach einem der vorhergehenden Ansprüche, wobei jede der Seitenflächen (110) mit der Nutkonfiguration (112) versehen ist.

8. Akustikplattenelement (100) nach einem der Ansprüche 1 bis 6, wobei zwei gegenüberliegende Seitenflächen (110a) der vier Seitenflächen (110, 110a) zum freitragenden Montieren des Akustikplattenelements (100) eingerichtet sind.

9. Akustikplattenelement (100) nach einem der vorhergehenden Ansprüche, wobei jede Nutkonfiguration (112) zum verdeckten Montieren des Plattenelements (100) eingerichtet ist.

10. Akustikplattenelement (100) nach einem der vorhergehenden Ansprüche, wobei jede zweite Nut (116) eine Anschlagfläche (122) umfasst, die zum Eingriff mit einer Trägerstruktur eingerichtet ist.

## Revendications

1. Élément de tuile acoustique (100) doté d'une surface avant (106) destinée à faire face à un espace (300), d'une surface
arrière opposée (180) et de quatre surfaces latérales (110, 110a) connectant la surface avant (106) et la surface arrière (108), l'élément de tuile acoustique (100) comprenant une première couche (102) et une seconde couche (104), la première couche (102) étant associée à la surface avant (106) et comprenant de la laine de bois, chacune des au moins deux surfaces latérales opposées (110) des quatre surfaces latérales (110, 110a) étant pourvue d'une configuration à gorge (112) pour le montage de l'élément de tuile acoustique (100) et s'étendant le long de la surface latérale associée (110), chaque configuration à gauche (112) étant formée par une première gorge (114) dans la première couche (102) et une seconde gorge (116) dans la seconde couche (104).

2. Élément de tuile acoustique (100) selon la revendication 1, dans lequel la première gorge (114) comporte un profilé à degré simple.

3. Élément de tuile acoustique (100) selon la revendication 1 ou 2, dans lequel la première couche (102) a une épaisseur d'au moins 10 mm.

4. Élément de tuile acoustique (100) selon l'une quelconque des revendications précédentes, dans lequel la seconde couche (104) comprend de la laine minérale.

5. Élément de tuile acoustique (100) selon l'une quelconque des revendications précédentes, dans lequel la première couche (102) est disposée directement contre la seconde couche (106).

6. Élément de tuile acoustique (100) selon l'une quelconque des revendications précédentes, dans lequel la première couche (102) est collée sur la seconde couche (104).

7. Élément de tuile acoustique (100) selon l'une quelconque des revendications précédentes, dans lequel chacune des surfaces latérales (110) est pourvue de la configuration à gorge (112).

8. Élément de tuile acoustique (100) selon l'une quelconque des revendications 1 à 6, dans lequel deux surfaces opposées (110a) des quatre faces latérales (110, 110a) sont configurées pour un montage sans support de l'élément de tuile acoustique (100).

9. Élément de tuile acoustique (100) selon l'une quelconque des revendications précédentes, dans lequel chaque configuration à gorge (112) est configurée pour un montage caché de l'élément de tuile (100).

10. Élément de tuile acoustique (100) selon l'une quelconque des revendications précédentes, dans lequel une seconde gorge sur deux (116) comprend une surface de butée (122) configuré pour s'engager dans une structure support.
